# EUROPÄISCHE PATENTSCHRIFT

(11) **EP 1 456 720 B1**
(45) Veröffentlichungstag und Bekanntmachung des Hinweises auf die Patenterteilung: **14.11.2007**
(21) Anmeldenummer: 02804542.5
(22) Anmeldetag: 09.12.2002
(51) Int. Cl.: G05B 9/03

(54) **MEHRKERNIGES REDUNDANTES KONTROLLRECHNERSYSTEM, RECHNERVERBUND FÜR SICHERHEITSKRITISCHE ANWENDUNGEN IN KRAFTFAHRZEUGEN SOWIE DESSEN VERWENDUNG**
MULTI-CORE REDUNDANT CONTROL COMPUTER SYSTEM, COMPUTER NETWORK FOR APPLICATIONS THAT ARE CRITICAL WITH REGARD TO SAFETY IN MOTOR VEHICLES, AND USE THEREOF
SYSTEME INFORMATIQUE DE COMMANDE REDONDANT A PLUSIEURS NOYAUX, RESEAU INFORMATIQUE POUR DES APPLICATIONS CRITIQUES EN MATIERE DE SECURITE DANS DES VEHICULES AUTOMOBILES ET SON UTILISATION

(30) Priorität: 11.12.2001 DE 10160683
(43) Veröffentlichungstag der Anmeldung: 15.09.2004
(73) Patentinhaber: Continental Teves AG & Co. oHG, 60488 Frankfurt am Main (DE)
(72) Erfinder: FEY, Wolfgang, 65527 Niedernhausen (DE); TRASKOV, Adrian, 61449 Steinbach (DE); KIRSCHBAUM, Andreas, 64347 Griesheim (DE)
(86) Internationale Anmeldenummer: PCT/EP2002/013943
(87) Internationale Veröffentlichungsnummer: WO 2003/050624

(56) Entgegenhaltungen:
- EP-A- 0 229 559
- EP-A- 0 840 225
- DE-A- 19 716 197
- US-A- 5 583 757
- US-A- 5 862 502
- US-B1- 6 201 997

## Beschreibung

Die Erfindung betrifft einen Rechnerverbund gemäß Oberbegriff von Anspruch 1 und dessen Verwendung in einem Fahrzeugkontrollrechner.

Es ist bekannt, für sicherheitskritische Anwendungen/Systeme im Kraftfahrzeug (wie z. B. elektronische Bremssysteme ABS, Elektronisches Stabilitäts-Programm ESP, elektrohydraulische Bremse, brake by wire etc.) Kontrollrechner (Mikrocontroller etc.) einzusetzen. Diese sogenannten elektronischen Regler bzw. Steuergeräte weisen bereits heute je nach Ausführungsvariante physikalische und/oder funktionale Rückfallebenen auf.

Eine hydraulische Rückfallebene wird beispielsweise dadurch realisiert, dass bei einer blockiergeschützten Bremsanlage im Fehlerfall der elektronische ABS-Regler abgeschaltet wird. Die bei abgeschaltetem Regler stromlosen Hydraulikventile sind so konzipiert, dass eine gewöhnlich Bremsung (ohne ABS) weiterhin vorgenommen werden kann. Es kann also bei Ausfall des Systems oder Systemteilen (z. B. Hydraulik bei Bremssystemen) ein Not-/ bzw. eingeschränkter Betrieb gewährleistet werden. Bei Systemen mit mechanischer Rückfallebene (eingeschränkte Funktionalität) genügt es demzufolge, die Kontrollrechner bei Erkennung eines Fehlers (Rechenfehler, Speicherfehler etc.) auszuschalten oder von der Peripherie an geeigneter Stelle abzukoppeln. Dies kann zum Beispiel dadurch erfolgen, dass der Kontrollrechner zwei gleichartige Mikroprozessorkerne umfasst, welche parallel und synchron das gleiche Programm abarbeiten. Bei einer Abweichung der Rechenergebnisse wird das Rechnersystem abgeschaltet.

In ähnlicher Weise lassen sich funktionelle Rückfallebenen realisieren. Wenn eine komplexe höherwertige Software-Funktion (z. B. ESP) fehlerhaft ist, wird diese stillgelegt, wobei die Software-Funktion mit niedrigerem Rang (z. B. ABS) weiterhin funktionsfähig bleibt.

Der Einsatz von sicherer elektronischer Hardware zur Steuerung und Regelung von Fahrzeugfunktionen in modernen Kraftfahrzeugen nimmt ständig zu. Dabei wird besonders auf eine hohe Ausfallsicherheit bzw. eine fehlertolerante Ausführung (Redundanzkonzept) der elektronischen Steuergeräte geachtet.

Zum Beispiel bei zukünftigen nichthydraulischen Bremssystemen, wie x-by-wire (z. B. elektromechanische Bremse) ist eine physikalische (hydraulische) Rückfallebene, wie sie weiter oben beschriebenen ist, nicht mehr vorhanden. Bei entsprechend ausgeführten Systemen besteht dann das Problem, dass die bisher bekannten selbstabschaltenden elektronischen Steuergeräte nicht mehr eingesetzt werden können.

Die Schrift DE 197 16 197 A1 offenbart ein Mikroprozessorsystem mit mindestens drei Zentraleinheiten, die durch redundante Peripherie-Einheiten zu mindestens zwei vollständigen Regelungssignalkreisen erweitert und derart zusammengeschaltet sind, dass bei Ausfall einer Zentraleinheit durch Majoritätsentscheidung in einer Identifizierungsstufe die fehlerhafte Zentraleinheit identifizierbar und eine Notlauffunktion aufrechterhalten wird.

Aufgabe der vorliegenden Erfindung ist es, ein fehlertolerantes elektronisches Steuergerät anzugeben, welches ausgesprochen ausfallsicher ist und dessen Verfügbarkeit hinsichtlich des Mikroprozessorsystems höher ist, als dies bei bisher bekannten Mikroprozessorkonzepten der Fall ist.

Diese Aufgabe wird durch einen Rechnerverbund gemäß Anspruch 1 gelöst.

Ein Vorteil des erfindungsgemäßen Rechnerverbunds besteht darin, dass durch Verwendung praktisch identischer Rechnerblöcke, die u. a. Kontrollrechnersysteme enthalten, ein kostengünstig herzustellendes System vorliegt, was auf Grund seines modularen Aufbaus durch geringe Änderungen an herstellerspezifische Anforderungen (z. B. fehlerabschaltendes oder fehlertolerantes Bremssystem) angepasst werden kann. Weiterhin ist mittels des erfindungsgemäßen Rechnerverbunds eine nahezu vollständige Fehlererkennung bei gleichzeitiger Aufrechterhaltung der vollen Funktionalität möglich. Weiterhin kann die Verfügbarkeit des vorgestellten Rechnerverbundes durch Hinzufügen weiterer Kontrollrechnersysteme fast beliebig erhöht werden. Des weiteren zeichnet sich der vorgestellte Rechnerverbund durch einen geringen Chipflächenverbrauch aus.

In einer bevorzugten Ausführungsform enthält nur ein erster Rechnerblock eine bevorzugt redundante Arbitrationseinheit, wohingegen ein zweiter Rechnerblock, oder mehrere weitere Rechnerblöcke, keine weiteren Arbitrationseinheiten beinhaltet. Bevorzugt ist auch, dass alle Rechnerblöcke mindestens eine, vorzugsweise redundante, Arbitrationseinheit aufweisen.

In einer weiteren bevorzugten Ausführungsform enthalten die Rechnerblöcke keine Arbitrationseinheiten, sondern sind nur mit einer bzw. mehreren Arbitrationseinheiten verbunden.

Eine weitere bevorzugte Ausführungsform des erfindungsgemäßen Rechnerverbundes sieht vor, den Rechnerverbund in sogenannter "Heißer Reserve" zu betreiben, wobei alle Kontrollrechner permanent Daten an einen vorzugsweise redundanten Fahrzeugdatenbus, insbesondere in getrennten Zeitschlitzen/-fenstern senden. In einem Fehlerfall schaltet die Arbitrierungseinheit des fehlerhaften Kontrollrechnersystems den Datenfluss der fehlerhaften Einheit zum Fahrzeugdatenbus ab. Somit ist sichergestellt, dass immer nur gültige Daten über den Fahrzeugdatenbus gesendet werden. Der Konsument der Daten, wie z. B. Aktoren oder Sensoren, entscheidet vorzugsweise, welche der redundant übertragenen Informationen verwendet wird.

In einer weiteren bevorzugten Ausführungsform des erfindungsgemäßen Rechnerverbundes liefert nur z. B. das erste Kontrollrechnersystem permanent Daten an den Fahrzeugdatenbus, während das zweite Kontrollrechnersystem zwar dieselben Rechenoperationen durchführt, aber nicht an den Fahrzeugdatenbus angeschlossen ist. Hierbei kann im Fehlerfall der Datenfluss vom ersten Kontrollrechnersystem zum Fahrzeugdatenbus unterbrochen und dieser durch das zweite Kontrollrechnersystem übernommen werden.

In einer weiteren Ausführungsvariante des erfindungsgemäßen Rechnerverbundes sind darin enthaltene Peripherieelemente (Sensoren, Aktoren, etc.) redundant ausgelegt.

In einer weiteren bevorzugten Ausführungsvariante können die Kontrollrechnersysteme zeitsynchron arbeiten. Da jedoch kein vollkommener Gleichlauf der Kontrollrechner erforderlich ist, können die Kontrollrechnersysteme auch zumindest teilweise unsynchronisiert laufen. Eine teilweise Synchronisation kann vorzugsweise durch den Fahrzeugdatenbus, der redundant ausgeführt sein kann, mittels einer Zeitscheibensynchronisation oder anderen geeigneten Synchronisationsmitteln erfolgen.

Vorteilhafterweise können die Kontrollrechnersysteme physikalisch in einem oder mehreren Gehäusen untergebracht sein. Besonders bevorzugt ist die Integration beider Kontrollrechnersysteme in einem elektronischen Steuergerät für das elektronische Bremssystem oder die Aufteilung der Kontrollrechnersysteme in verschiedene Gehäuse des elektronischen Bremssystems. Eine ganz besonders bevorzugte Aufteilung ist die Anordnung des zweiten Kontrollrechnersystems in einem an einen Fahrzeugdatenbus angeschlossenen Gehäuse, welches normalerweise zur Aufnahme der Fahrdynamik-Sensoren eines ESP-Systems vorgesehen ist.

Es ist bevorzugt, einen ersten Kommunikationskontroller mit dem ersten Kontrollrechnersystem auf einem ersten Chip zu integrieren, und die erste Arbitrationseinheit zusammen mit einem Peripherietreiber auf einem dritten Chip zu integrieren. Eine Verbindung des ersten Chips mit dem dritten Chip erfolgt hierbei z. B. über Bonddrähte. Der Vorteil der getrennten Chips besteht darin, das z. B. bei Ausfall der Spannungsversorgung des ersten Chips der dritte Chip noch arbeitet, wobei dieser den Ausfall des ersten Chips z. B. daran erkennt, dass eine Fehlermeldung, auf Grund der nichtvorhandenen Rechenergebnisse des ersten Kontrollrechners, an die erste Arbitrationseinheit gelangt, und diese über eine Busabschaltung den ersten Kommunikationskontroller vom Fahrzeugdatenbus abtrennt.

Der Rechnerverbund nach der Erfindung hat den Vorteil, dass das erfindungsgemäße Redundanzkonzept transparent für die Software ist. Es ist ein besonders geringer Software-Anteil (Overhead) nötig, um das Fehlertoleranz-Konzept nach der Erfindung auszuführen. Dies trifft besonders dann zu, wenn die Arbitrationseinheiten, was bevorzugt ist, diskret (in Hardware) aufgebaut werden.

Ein Kontrollrechnersystem weißt bevorzugt redundante Vergleichseinheiten auf, die über einen zugeordneten Kommunikationskontroller an den Fahrzeugdatenbus angeschlossen sind.

In einer weiteren bevorzugten Ausführungsform deaktiviert eine lokal zugeordnete Arbitrationseinheit bei einer Fehlfunktion eines der zugeordneten Kontrollrechner das Kontrollrechnersystem teilweise oder vollständig.

Erfindungsgemäß koppelt eine Arbitrationseinheit über die Busabschaltung den zugeordneten Kommunikationskontroller an den Fahrzeugdatenbus an- oder ab.

Eine bevorzugte Weiterbildung besteht darin, dass eine Arbitrationseinheit mindestens eine Peripherieabschaltung aufweist, welche den Peripherietreiber aktivieren oder deaktivieren kann.

In einer weiteren bevorzugten Ausführungsform sind Peripherieelemente über ein Steuerbussystem mit dem Peripherietreiber verbunden.

Weiterhin bevorzugt ist, dass eine Arbitrationseinheit in einem Fehlerfall über die Peripherieabschaltung den Peripherietreiber bzw. mindestens ein Peripherieelement deaktiviert.

Zur Steuerung der sicherheitskritischen Anwendungen werden in zunehmendem Maße Kontrollrechner benötigt, die in vielen Fällen in sog. elektronischen Steuergeräten untergebracht sind. Unter dem Begriff "Kontrollrechner" werden ganz allgemein Computersysteme wie z. B. Mikrocontroller verstanden, welche neben einer Zentralrecheneinheit (CPU) zusätzlich Speicher und Ein-/Ausgabefunktionen umfassen. "Mehrkernig" sind die Kontrollrechner dann, wenn sie zwei oder mehrere Zentralrecheneinheiten umfassen.

Ein weiterer Gegenstand der Erfindung ist daher die Verwendung des Rechnerverbunds gemäß Anspruch 1 in einem Fahrzeugkontrollrechner, wobei der Rechnerverbund Algorithmen zur Steuerung von Funktionen eines Kraftfahrzeugs umfasst.

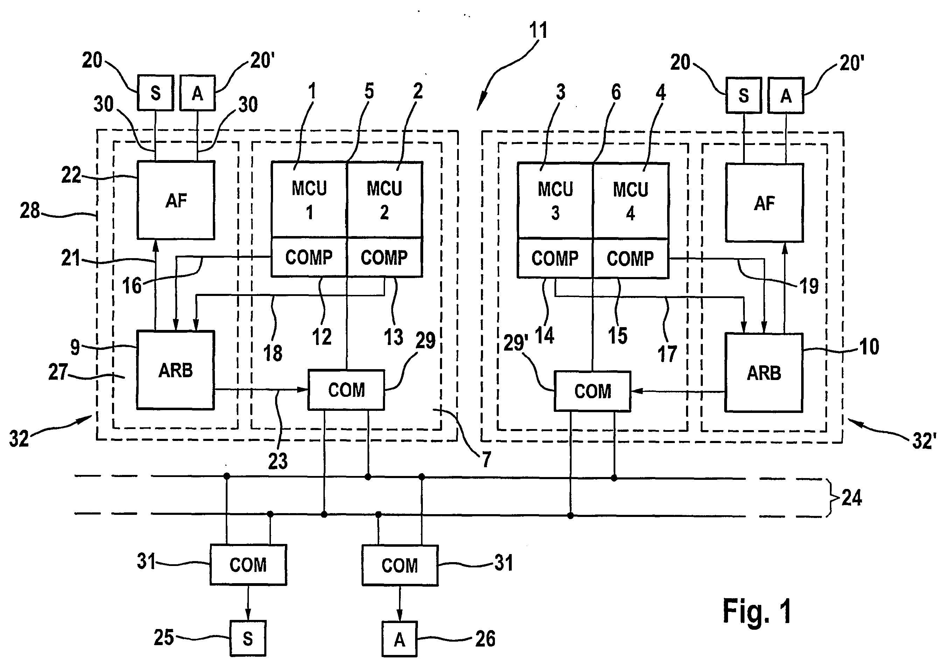

Der Aufbau und die Funktion eines erfindungsgemäßen Rechnerverbundes wird in der nachfolgenden Beschreibung für eine bevorzugte Ausführungsform anhand der Fig. 1 erläutert.

Rechnerverbund 11 enthält zwei Rechnerblöcke 32 und 32'. Rechnerblöcke 32, 32' übergeben bzw. erhalten über Kommunikationskontroller 29, 29' Daten an bzw. von einem Fahrzeugdatenbus 24 (z. B. CAN, Flexray, TTCAN, TTP). Diese Daten werden über Kommunikationseinrichtungen 31 an ein viertes Peripherieelement 26 (z. B. ein Aktuator) übergeben. Weiterhin werden auch Daten von einem dritten Peripherieelement 25 (z. B. ein Sensor) über den Fahrzeugdatenbus 24 an die Kommunikationskontroller 29, 29' übergeben. Die Rechnerblöcke 32, 32' erhalten auch Daten von Sensor 20 (z. B. Drucksensor oder Fahrdynamiksensor), die an dem jeweiligen Rechnerblock 32 oder 32' angeschlossen sind, bzw. übergeben Daten an Aktoren 20' (z. B. hydraulische Ventilspulen). Der innere Aufbau eines Rechnerblocks 32, 32' wird im weiteren anhand des ersten Rechnerblocks 32 erläutert, da der zweite Rechnerblock 32' des vorliegenden Beispiels praktisch identisch aufgebaut ist.
Rechnerblock 32 enthält einen ersten Chip 7 und einen zweiten Chip 27, wobei diese auf einem gemeinsamen Chipträger 28 angeordnet sind. Auf dem ersten Chip 7 ist ein erstes Kontrollrechnersystem 5, bestehend aus zwei zeitsynchron bzw. taktsynchron arbeitenden Kontrollrechnern 1, 2 angeordnet. Kontrollrechner 1, 2 weisen redundante Vergleichseinheiten 12, 13 auf, welche die Rechenergebnisse der Kontrollrechner 1, 2 miteinander vergleichen und diese an den auf dem ersten Chip 7 integrierten ersten Kommunikationskontroller 29 weitergeben. Stimmen die Rechenergebnisse nicht überein, so wird eine Fehlermeldung über zwei Fehlerleitungen 16, 18 an eine erste Arbitrationseinheit 9 übermittelt. Die erste Arbitrationseinheit 9 schaltet im Fehlerfall über Busabschaltung 23 den ersten Kommunikationskontroller 29 ab, so dass die fehlerhaften Daten der Kontrollrechner 1, 2 nicht mehr auf den Fahrzeugdatenbus 24 gelangen. Weiterhin schaltet die erste Arbitrationseinheit 9 im Fehlerfall über Peripherieabschaltung 21 Peripherietreiber 22, an dem der Sensor 20 und der Aktor 20' angeschlossen sind, ab.

Sensor 20 bzw. Aktor 20' sind über steuergerätspezifische Bussysteme 30 über den Peripherietreiber 22 an Rechnerblock 32 angeschlossen.

Rechnerverbund 11 ist aus zwei Rechnerblöcken 32, 32' gebildet, wobei dieser im Gegensatz zu den einzelnen Rechnerblöcken 32, 32' fehlertolerant arbeitet. Über die beiden Kommunikationskontroller 29, 29' werden die Daten der beiden Kontrollrechnersysteme 5, 6 in jeweils einem Zeitschlitz/fenster auf den Fahrzeugdatenbus 24 gesendet. Wenn eine der Arbitationseinheiten 9 oder 10 einen Rechenfehler in den Kontrollrechnersystemen 5 oder 6 feststellt, schaltet die Arbitationseinheit 9 oder 10 den betreffenden Kommunikationskontroller 29 oder 29' ab, so dass die Daten des falsch rechnenden Kontrollrechnersystems 5 oder 6 nicht mehr auf den Fahrzeugdatenbus 24 gelangen. Die an den Fahrzeugdatenbus 24 angeschlossenen Kommunikationseinrichtungen 31 sind hierbei in der Lage, selbständig die benötigten Daten aus dem übriggebliebenen Zeitschlitz/ -fenster zu übernehmen.

## Patentansprüche

1. Rechnerverbund (11) für sicherheitskritische Anwendungen in Kraftfahrzeugen aus zwei oder mehreren Rechnerblöcken (32, 32'), **dadurch gekennzeichnet, dass** mindestens zwei Rechnerblöcke jeweils ein mehrkerniges redundantes Kontrollrechnersystem (5, 6) umfassen, welches jeweils zumindest zwei Kontrollrechner (1, 2; 3, 4) beinhaltet, welche neben jeweils einem Rechnerkern mit teil- oder vollredundanten Peripherieelementen und teil- oder vollredundanten Speicherelementen ausgestattet sind, wobei die mindestens zwei Kontrollrechner eines Kontrollrechnersystems oder die Rechnerblöcke auf einem gemeinsamen Chipträger (28) oder einem gemeinsamen Chip (7) integriert sind, und wobei für mindestens einen Rechnerblock, insbesondere für alle Rechnerblöcke, die mindestens zwei Kontrollrechner (1, 2) des Kontrollrechnersystems mit mindestens einer Arbitrationseinheit (9) verbunden sind, welche die Kontrollrechner auf eine Fehlfunktion hin überwacht und welche über eine Busabschaltung (23) einen dem Kontrollrechnersystem zugeordneten Kommunikationskontroller (29) an einen Fahrzeugdatenbus (24) an- oder abkoppelt.

2. Rechnerverbund nach Anspruch 1, **dadurch gekennzeichnet, dass** zumindest die mindestens zwei Kontrollrechner (1, 2) eines Kontrollrechnersystems taktsynchron arbeiten.

3. Rechnerverbund nach Anspruch 1 oder 2, **dadurch gekennzeichnet, dass** zumindest ein Kontrollrechnersystem (5) redundante Vergleichseinheiten (12, 13) aufweist.

4. Rechnerverbund nach mindestens einem der Ansprüche 1 bis 3, **dadurch gekennzeichnet, dass** die einem Kontrollrechnersystem (5) zugeordnete Arbitrationseinheit (9) bei einer Fehlfunktion eines der zugeordneten Kontrollrechner (1, 2) das Kontrollrechnersystem (5) teilweise oder vollständig deaktiviert.

5. Rechnerverbund nach mindestens einem der Ansprüche 1 bis 4, **dadurch gekennzeichnet, dass** die einem Kontrollrechnersystem zugeordnete Arbitrationseinheit (9) mindestens eine Peripherieabschaltung (21) aufweist, welche einen Peripherietreiber (22) aktivieren oder deaktivieren kann.

6. Rechnerverbund nach Anspruch 5, **dadurch gekennzeichnet, dass** Peripherieelemente (20, 20') über ein Steuerbussystem (30) mit dem Peripherietreiber (22) verbunden sind.

7. Rechnerverbund nach Anspruch 5 oder 6, **dadurch gekennzeichnet, dass** der Kommunikationskontroller mit dem Kontrollrechnersystem auf einem Chip (7) integriert ist und die Arbitrationseinheit zusammen mit dem Peripherietreiber auf einem anderen Chip (27) integriert ist, wobei eine Verbindung der beiden Chips, insbesondere über Bonddrähte, erfolgt.

8. Rechnerverbund nach mindestens einem der Ansprüche 5 bis 7, **dadurch gekennzeichnet, dass** die einem Kontrollrechnersystem zugeordnete Arbitrationseinheit (9) in einem Fehlerfall über die Peripherieabschaltung (21) den Peripherietreiber (22) bzw. mindestens ein Peripherieelement (20, 20') deaktiviert.

9. Rechnerverbund nach mindestens einem der vorhergehenden Ansprüche, **dadurch gekennzeichnet, dass** alle Rechnerblöcke identisch aufgebaut sind.

10. Verwendung eines Rechnerverbunds (11) gemäß Anspruch 1 in einem Fahrzeugkontrollrechner.

## Claims

1. Computer network (11) for safety-critical applications in motor vehicles comprising two or more computer blocks (32, 32'),
**characterized in that** at least two computer blocks comprise each one multi-core redundant control computer system (5, 6), which includes at least two control computers (1, 2; 3, 4) being equipped with partly or fully redundant periphery elements and partly or fully redundant memory elements in addition to one computer core each, and the at least two control computers of a control computer system or the computer blocks are integrated on one joint chip carrier (28) or one joint chip (7), and for at least one computer block, in particular for all computer blocks, the at least two control computers (1, 2) of the control computer systems are connected to at least one arbitration unit (9) that monitors the control computers with respect to malfunction and couples a communication controller (29) associated with the control computer system to a vehicle data bus (24), or uncouples it therefrom, by way of a bus disconnection (23).

2. Computer network as claimed in claim 1,
**characterized in that** at least the at least two control computers (1, 2) of a control computer system (5) operate clock-synchronously.

3. Computer network as claimed in claim 1 or 2,
**characterized in that** at least one control computer system (5) includes redundant comparison units (12, 13).

4. Computer network as claimed in at least any one of claims 1 to 3,
**characterized in that** the arbitration unit (9) associated with a control computer system (5) partly or completely deactivates the control computer system (5) upon malfunction of any one of the associated control computers (1, 2).

5. Computer network as claimed in at least any one of claims 1 to 4,
**characterized in that** the arbitration unit (9) associated with a control computer system includes at least one periphery disconnection (21) that is able to activate or deactivate a periphery driver (22).

6. Computer network as claimed in claim 5,
**characterized in that** periphery elements (20, 20') are connected to the periphery driver (22) by way of a control bus system (30).

7. Computer network as claimed in claim 5 or 6,
**characterized in that** the communication controller along with the control computer system is integrated on a chip (7), and the arbitration unit along with the periphery driver is integrated on another chip (27), and a connection is established between the two chips, especially by way of bond wires.

8. Computer network as claimed in at least any one of claims 5 to 7,
**characterized in that** the arbitration unit (9) associated with a control computer system deactivates the periphery driver (22) or at least one periphery element (20, 20'), respectively, by way of the periphery disconnection (21) in the case of a fault.

9. Computer network as claimed in at least any one of the preceding claims,
**characterized in that** all computer blocks have an identical design.

10. Use of a computer network (11) as claimed in claim 1 in a vehicle control computer.

## Revendications

1. Réseau informatique (11) pour applications critiques sur le plan de la sécurité dans des véhicules automobiles, constitué de deux blocs informatiques (32, 32') ou plus, **caractérisé en ce qu'**au moins deux blocs informatiques comprennent chacun un système informatique de contrôle (5, 6) redondant à plusieurs noyaux, qui contient chaque fois au moins deux ordinateurs de contrôle (1, 2 ; 3, 4) qui sont équipés chacun, outre d'un noyau informatique, d'éléments périphériques partiellement ou totalement redondants et d'éléments de mémoire partiellement ou totalement redondants, les au moins deux ordinateurs de contrôle d'un système informatique de contrôle ou les blocs informatiques étant intégrés sur un support de puce (28) commun ou une puce commune (7), et pour au moins un bloc informatique, en particulier pour tous les blocs informatiques, les au moins deux ordinateurs de contrôle (1, 2) du système informatique de contrôle sont reliés à au moins une unité d'arbitrage (9) qui surveille les ordinateurs de contrôle quant à un fonctionnement défectueux et qui accouple à un bus de données de véhicule (24) ou désaccouple de celui-ci, à travers un circuit de bus (23), un contrôleur de communication (29) associé au système informatique de contrôle.

2. Réseau informatique selon la revendication 1, **caractérisé en ce qu'**au moins les au moins deux ordinateurs de contrôle (1, 2) d'un système informatique de contrôle fonctionnent de manière synchrone.

3. Réseau informatique selon la revendication 1 ou 2, **caractérisé en ce qu'**au moins un système informatique de contrôle (5) comporte des unités de comparaison (12, 13) redondantes.

4. Réseau informatique selon l'une au moins des revendications 1 à 3, **caractérisé en ce que** l'unité d'arbitrage (9), associée à un système informatique de contrôle (5), désactive le système informatique de contrôle (5) en partie ou totalement en cas de dysfonctionnement de l'un des ordinateurs de contrôle (1, 2) associés.

5. Réseau informatique selon l'une au moins des revendications 1 à 4, **caractérisé en ce que** l'unité d'arbitrage (9), associée à un système informatique de contrôle, comporte au moins un dispositif de coupure de périphérique (21) qui peut activer ou désactiver un gestionnaire de périphérique (22).

6. Réseau informatique selon la revendication 5, **caractérisé en ce que** des éléments périphériques (20, 20') sont reliés au gestionnaire de périphérique (22) par un système de bus de contrôle (30).

7. Réseau informatique selon la revendication 5 ou 6, **caractérisé en ce que** le contrôleur de communication est intégré avec le système informatique de contrôle sur une puce (7) et l'unité d'arbitrage avec le gestionnaire de périphérique est intégrée sur une autre puce (27), les deux puces étant reliées, en particulier par des fils de liaison.

8. Réseau informatique selon l'une au moins des revendications 5 à 7, **caractérisé en ce que** l'unité d'arbitrage (9), associée à un système informatique de contrôle, désactive, en cas de défaut, le gestionnaire de périphérique (22) ou au moins un élément périphérique (20, 20'), à travers le dispositif de coupure de périphérique (21).

9. Réseau informatique selon l'une au moins des revendications précédentes, **caractérisé en ce que** tous les blocs informatiques sont de construction identique.

10. Utilisation d'un réseau informatique (11) selon la revendication 1 dans un ordinateur de contrôle de véhicule.
